# FASCICULE DE BREVET EUROPEEN

(11) **EP 1 463 254 B1**
(45) Date de publication et mention de la délivrance du brevet: **21.06.2006**
(21) Numéro de dépôt: 04300112.2
(22) Date de dépôt: 04.03.2004
(51) Int. Cl.: H04L 27/12

(54) **Procédé de modulation FSK sur la base d'une seule fréquence de référence**
FSK-Modulationsverfahren basierend auf einer einzigen Referenzfrequenz
FSK modulation method based on a single reference frequency

(30) Priorité: 27.03.2003 FR 0303782
(43) Date de publication de la demande: 29.09.2004
(73) Titulaire: Valeo Electronique et Systemes de Liaison, 78180 Montigny le Bretonneux (FR)
(72) Inventeur: Gascher, Alain, 75007 Paris (FR)
(74) Mandataire: Prugneau, Philippe

(56) Documents cités:
- EP-A- 0 660 516
- DE-A- 2 547 673
- US-A- 3 336 536

## Description

L'invention concerne un procédé de modulation FSK pour former un signal de sortie formé d'une alternance de signaux à une première fréquence et de signaux à une seconde fréquence.

L'invention s'applique à la transmission de données par courants porteurs dans un véhicule automobile par émission de signaux FSK sur des câbles destinés à l'alimentation électrique d'organes du véhicule en vue de commander des charges électriques comme par exemple des éléments d'éclairage ou bien de transmettre des informations issues de capteurs. Cette transmission met en oeuvre plusieurs étages de conversion, l'un d'entre eux consistant à moduler un signal d'entrée en un signal de sortie FSK. Le signal d'entrée est par exemple formé d'une alternance entre une première valeur de tension et une seconde valeur de tension. L'acronyme FSK (Frequency Shift Keying) signifie modulation par déplacement de fréquence, c'est-à-dire que le signal de sortie est un signal périodique ayant la première fréquence lorsque le signal d'entrée a la première valeur de tension, et la seconde fréquence lorsque le signal d'entrée a la seconde valeur de tension.

Dans un procédé de modulation connu, un signal de référence de fréquence élevée est divisé par deux nombres entiers très proches, de manière à former deux générateurs produisant respectivement un signal à la première fréquence et un signal à la seconde fréquence. La modulation consiste à former un signal de sortie en commutant entre la première et la seconde fréquence en fonction de la valeur de tension du signal d'entrée. L'association d'un générateur 100MHz avec un diviseur par 99 et un diviseur par 101 permet d'obtenir une première fréquence de 1,01MHz et une seconde fréquence de 0,99MHz. La mise en oeuvre de ce procédé pour réaliser un circuit capable de moduler autour de 2MHz nécessite donc un générateur capable de délivrer un signal de référence ayant une fréquence de 200MHz. Le coût d'un générateur étant d'autant plus important que sa fréquence est élevée, la nécessité d'utiliser un générateur 200MHz pour réaliser un circuit capable de moduler autour de 2MHz introduit un surcoût non négligeable. D'autre part, ce procédé comme d'autres procédés existants nécessitent d'être mis en oeuvre dans un circuit électronique analogique, ce qui induit des temps de développement importants synonymes de surcoût non négligeable.

Le but de l'invention est de remédier à ces inconvénients en proposant un procédé pour générer un signal de sortie FSK ayant un faible coût de fabrication et pouvant être implémenté dans un circuit numérique.

A cet effet, l'invention a pour objet un procédé de modulation FSK pour générer un signal de sortie formé d'une alternance de signaux à une première fréquence et de signaux à une seconde fréquence, consistant à convertir un signal de référence de fréquence constante et de forme rectangulaire en une série de n signaux secondaires successifs de même fréquence que ce signal de référence, deux signaux secondaires successifs étant déphasés d'une valeur de 360/n degrés l'un par rapport à l'autre, à former par division du signal de référence un signal de commutation ayant une troisième fréquence, à construire le signal de sortie à la première fréquence en commutant cycliquement à la troisième fréquence les signaux secondaires dans un sens de la série de signaux secondaires et à construire le signal de sortie à la seconde fréquence en commutant cycliquement à la troisième fréquence les signaux secondaires dans le sens contraire de la série de signaux secondaires.

Selon ce procédé, le signal de sortie est généré à partir d'une fréquence de référence qui est comprise entre la première et la deuxième fréquence. Cette fréquence de référence étant abaissée, le coût de fabrication d'un modulateur exploitant ce procédé est significativement réduit. Ce procédé peut avantageusement être mis en oeuvre dans un microcontrôleur, qui est numérique par définition.

Le nombre n désigne un entier dont la valeur est choisie en fonction de la qualité souhaitée pour le signal de sortie, une valeur élevée ayant pour effet d'améliorer la qualité du signal de sortie. Selon un mode de mise en oeuvre n vaut quatre, des essais ayant montré que cette valeur est suffisante pour former un signal de sortie dont les première et deuxième fréquence sont situées autour de 2MHz.

Selon un mode de réalisation préféré, le procédé inclut un traitement pour démoduler un signal FSK, consistant à injecter ce signal FSK parallèlement dans deux mélangeurs pilotés respectivement par deux signaux secondaires en quadrature pour former deux signaux mélangés, et à appliquer ces deux signaux mélangés à une bascule pour former un signal démodulé. Cette variante peut également être implémentée dans un microcontrôleur pour fabriquer un modulateur-démodulateur FSK ayant un faible coût de fabrication.

Avantageusement, le procédé gère un traitement d'écho consistant à démoduler le signal de sortie pour détecter un défaut de modulation FSK par analyse du signal démodulé. L'analyse consiste par exemple à comparer le signal de sortie démodulé avec le signal d'entrée, et à détecter un défaut lorsqu'il existe une différence entre ces deux signaux.

L'invention sera maintenant décrite plus en détail, et en référence aux dessins annexés qui en illustrent une forme de réalisation à titre d'exemple non limitatif.
La figure 1 est représentation sous forme de schéma bloc du procédé selon l'invention ;
La figure 2 est un chronogramme illustrant la génération d'un signal de sortie à la première fréquence ;
La figure 3 est un chronogramme illustrant la génération d'un signal de sortie à la deuxième fréquence ;
La figure 4 est une représentation sous forme de schéma bloc d'une variante du procédé selon l'invention ;
La figure 5 est un chronogramme illustrant la variante du procédé selon l'invention.

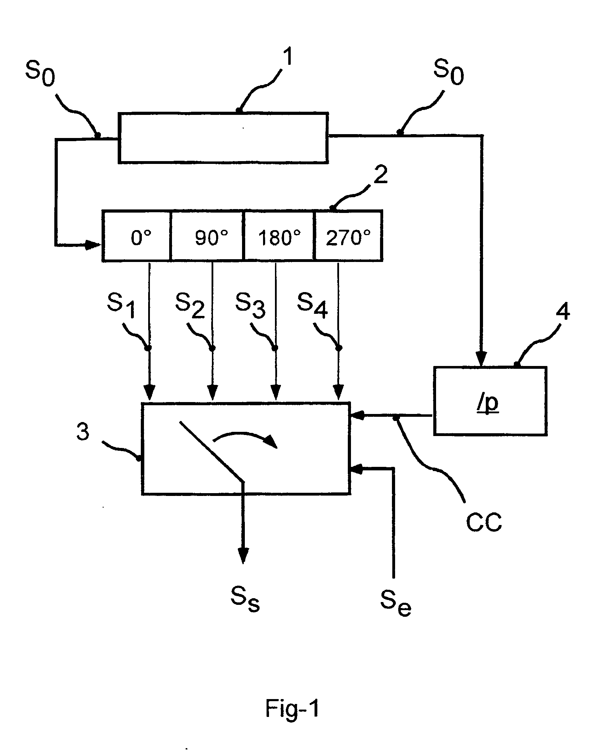

Le procédé pour moduler un signal d'entrée S_{E} formé d'une alternance entre une première valeur de tension et une seconde valeur de tension en un signal de sortie S_{S} de type FSK est représenté schématiquement figure 1. La modulation FSK d'un tel signal d'entrée S_{E} consiste à former un signal de sortie S_{S} ayant une première fréquence F₁ lorsque le signal d'entrée S_{E} est à la première valeur de tension, et une deuxième fréquence F₂ lorsque le signal d'entrée S_{E} est à la deuxième valeur de tension.

Comme représenté figure 1, un signal de référence S₀ de forme rectangulaire ayant une fréquence F₀ constante est généré au bloc 1 et est converti au bloc 2 en une pluralité de n signaux secondaires successifs. Chaque signal secondaire a la même fréquence que le signal S₀, mais est déphasé par rapport à celui-ci de sorte que deux signaux secondaires consécutifs dans le bloc 2 (S₁ et S₂ ; S₂ et S₃ ; S₃ et S₄) sont déphasés entre eux d'une valeur angulaire de 360/n degrés, n désignant un nombre entier dont le choix sera détaillé plus bas. Dans l'exemple des figures 1 à 5, n est égal à quatre, de sorte que quatre signaux secondaires S₁, S₂, S₃, S₄ déphasés respectivement par rapport au signal de référence S₀ de 0, 90, 180, 270 degrés. Le bloc 3 représente un commutateur qui dirige tour à tour les signaux secondaires issus du bloc 2 vers le signal de sortie S_{S}.

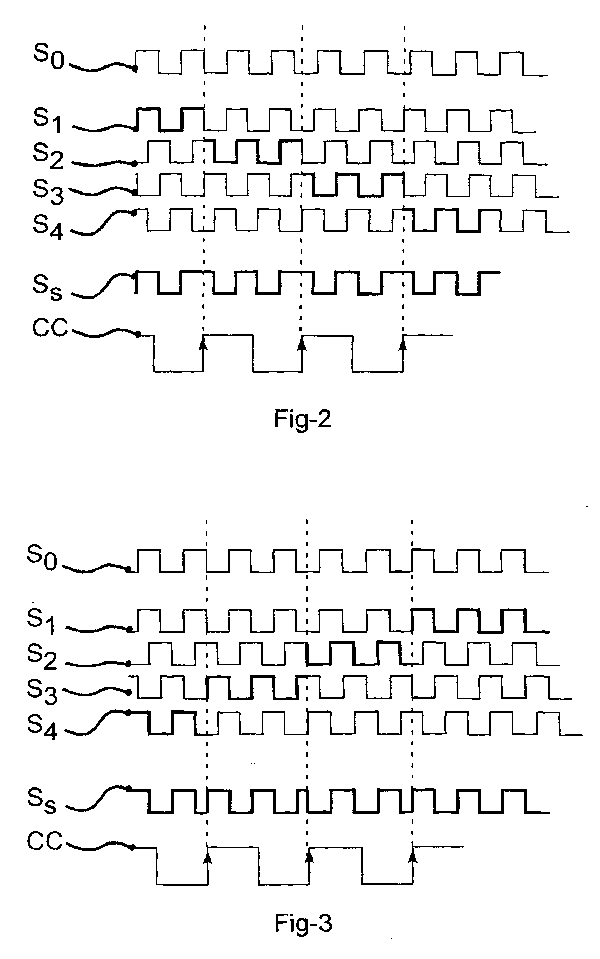

Le signal de sortie S_{S} est constitué par le résultat d'une commutation cyclique à une troisième fréquence prédéfinie F₃ d'un signal secondaire vers un autre signal secondaire, c'est à dire par commutation des signaux secondaires dans un sens ou dans l'autre de la série de signaux secondaires. Chaque commutation est déclenchée par un front montant d'un signal de commutation CC qui est ici un signal carré de fréquence F₃ constante significativement inférieure à la fréquence de référence F₀. Ce signal de commutation est formé par division du signal de référence S₀. Selon que cette commutation est réalisée d'un signal secondaire vers son successeur ou vers son prédécesseur, la fréquence obtenue pour le signal de sortie S_{S} est respectivement F₁ ou F₂. Figure 2, chaque commutation est réalisée d'un signal secondaire vers son successeur dans la série pour former un signal de sortie S_{S} à la première fréquence F₁, qui est inférieure à F₀. Figure 3, le signal de sortie S_{S} est formé en commutant cycliquement d'un signal secondaire vers son prédécesseur dans la série pour former un signal de sortie S_{S} à la deuxième fréquence F₂, F₂ étant légèrement supérieure à F₀.

Plus particulièrement, le successeur d'un signal secondaire est le signal secondaire présentant le plus faible retard de phase, le successeur du dernier signal secondaire étant le premier signal secondaire, de sorte que S₃ est le successeur de S₂, et S₁ celui de S₄. De manière analogue, le prédécesseur d'un signal secondaire est le signal secondaire présentant la plus faible avance de phase, le prédécesseur du premier signal secondaire étant le dernier signal secondaire, de sorte que S₁ est le prédécesseur de S₂ et S₄ celui de S₁.

Dans le procédé selon l'invention, la modulation FSK consiste donc à piloter l'ordre de commutation des signaux secondaires par le signal d'entrée S_{E} de manière à commuter cycliquement d'un signal secondaire vers son successeur lorsque le signal d'entrée S_{E} est à la première valeur, et d'un signal secondaire vers son prédécesseur lorsque le signal d'entrée S_{E} est à la deuxième valeur de tension.

Le signal de commutation CC de fréquence constante F₃ peut avantageusement être obtenu en divisant le signal de référence S₀ par un entier p, ce qui est représenté schématiquement par /p dans le bloc 4 de la figure 1. Le choix de la valeur de p influe sur la différence entre les fréquences F₁ et F₂ : plus la valeur de p est élevée, plus cette différence est faible. Une modulation FSK avec deux fréquences très proches de la fréquence de référence F₀ est obtenue avec une valeur élevée de p. Pour réaliser un modulateur dans lequel |F₁ - F₀| = |F₂ - F₀| = 5kHz avec une fréquence de référence F₀ de 2MHz, il faut commuter n fois par période de 5kHz. Pour n = 4, ceci conduit à une troisième fréquence F₃ valant 20kHz, soit p = 100.

Comme indiqué plus haut, la valeur de l'entier n constitue un autre paramètre de fonctionnement, cette valeur ayant une influence sur la qualité du signal de sortie S_{S} : plus n est élevé -c'est à dire plus le nombre de signaux secondaires est important- plus la qualité du signal de sortie S_{S} est améliorée. Des simulations et des essais montrent que pour moduler un signal de sortie dont les première et deuxième fréquences valent respectivement 1,99MHz et 2,01MHz, n = 4 constitue une valeur satisfaisante pour générer un signal de sortie S_{S} de qualité satisfaisante, ce qui correspond à l'exemple de mise en oeuvre représenté sur les différentes figures.

Le procédé selon l'invention peut être mis en oeuvre avec un microcontrôleur dans lequel sont implémentés un générateur du signal de référence S₀, une unité de déphasage pour convertir ce signal de référence S₀ en n signaux secondaires déphasés, et une unité de commutation pour générer le signal de sortie S_{S} en commutant successivement d'un signal secondaire à un autre. Il est ainsi possible de réduire le modulateur FSK à un unique composant silicium de plus faibles dimensions qu'un circuit électronique analogique. L'implémentation dans un microcontrôleur offre une grande souplesse dans la modification des paramètres de fonctionnement tels que les entiers n et p.

Dans une variante, le procédé selon l'invention comprend un traitement pour démoduler un signal FSK, de sorte qu'il est possible de fabriquer à moindre coût un modulateur-démodulateur FSK, basé sur une seule fréquence de référence.

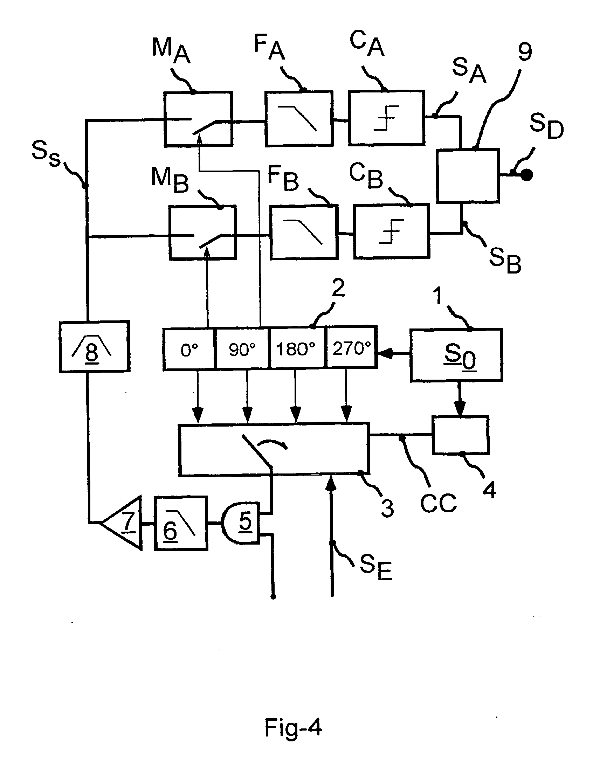

Cette variante qui est illustrée schématiquement figure 4 consiste à injecter un signal FSK à démoduler, parallèlement dans deux mélangeurs M_{A}, M_{B} pilotés respectivement par deux signaux secondaires S₁, S₂ en quadrature. Les deux mélangeurs délivrent respectivement deux signaux mélangés S_{A} et S_{B}, qui sont ensuite appliqués à une bascule logique 9 pour former un signal démodulé S_{D}.

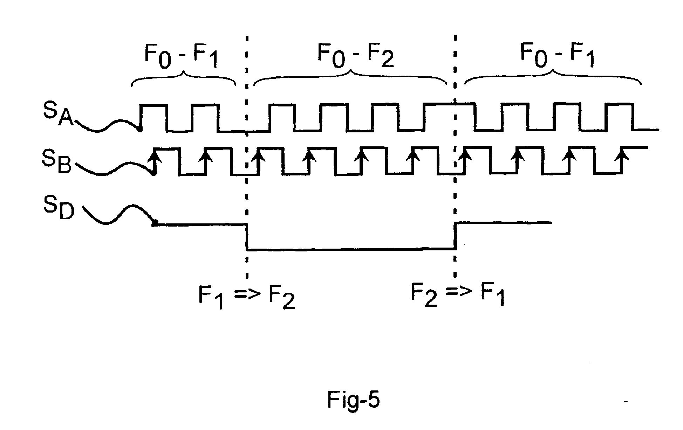

Plus particulièrement, les deux mélangeurs M_{A} et M_{B} délivrent respectivement des signaux mélangés S_{A} et S_{B} qui ont chacun pour fréquence la différence entre la fréquence du signal de sortie S_{S} et la fréquence de référence F₀. Les signaux S_{A} et S_{B} sont représentés sous forme de chronogrammes sur la figure 5. Dans le cas où le signal de sortie S_{S} est à la première fréquence F₁, le signal S_{A} est en avance de phase par rapport à S_{B}, et lorsque le signal FSK est à la deuxième fréquence F₂, le signal S_{A} est en retard de phase par rapport à S_{B}. L'application des deux signaux mélangés S_{A} et S_{B} respectivement aux entrées d'une bascule logique 9 permet de terminer la démodulation du signal de sortie en un signal démodulé S_{D}.

Le procédé selon l'invention peut avantageusement prendre en compte la gestion d'un mode écho pour détecter un éventuel défaut de modulation FSK. Ce mode écho est obtenu en démodulant le signal de sortie S_{S} pour analyser le signal démodulé S_{D} en détectant la présence d'un défaut en cas de différence entre le signal S_{E} et le signal démodulé S_{D}. La gestion du mode écho est réalisée en injectant le signal de sortie S_{S} parallèlement dans les deux mélangeurs M_{A} et M_{B} comme indiqué plus haut. Comme connu du mode écho, la détection d'un défaut consiste à comparer le signal démodulé S_{D} avec le signal d'entrée S_{E} pour en déduire la présence d'un défaut en cas de différence entre ces deux signaux, cette comparaison n'étant pas représentée sur les figures.

Avantageusement, dans cette variante, le signal de sortie S_{S} passe dans un filtre passe-bande 8 pour supprimer les harmoniques de rang élevé, avant d'être injecté dans les mélangeurs. D'autre part, les signaux mélangés S_{A} et S_{B} sont remis en forme respectivement par un filtre passe-bas F_{A}, F_{B} et un comparateur C_{A}, C_{B} avant d'être injectés dans la bascule 9. De manière analogue, le signal de sortie S_{S} est remis en forme en passant successivement dans un filtre passe-bas 6 suivi d'un amplificateur 7. Comme visible dans le schéma-bloc de la figure 4, une porte logique "et" ayant une entrée reliée à la sortie du déphaseur 2 et sa sortie reliée au filtre passe-bas 6 permet d'activer ou de désactiver le modulateur FSK en pilotant son autre entrée.

Comme visible figure 4, les deux mélangeurs M_{A} et M_{B} sont pilotés par deux signaux secondaires en quadrature issus du bloc de déphasage 2. Ceci nécessite que le bloc de déphasage 2 génère deux signaux en quadrature, c'est à dire déphasés entre eux de 90 degrés. Dans l'exemple illustré sur les figures pour lequel le déphaseur produit quatre signaux secondaires, il s'agit du premier et du second signal secondaires, S1 et S2. Pour une valeur de n différente, il est donc avantageux de choisir une valeur de n multiple de quatre pour assurer qu'il existe deux signaux secondaires déphasés de 90 degrés.

L'invention peut avantageusement être mise en oeuvre pour la transmission de données numériques dans un véhicule automobiles par 5 courants porteurs. Dans cette mise en oeuvre, les signaux FSK sont transmis sur des conducteurs électriques du véhicule, ces conducteurs étant simultanément exploités pour alimenter électriquement des organes électriques du véhicule, ce qui permet de réduire significativement la quantité de câblages nécessaires dans un véhicule électrique pour réduire son coût de fabrication. L'invention n'est pas uniquement réservée à une application de transmission de données par courants porteurs, mais pourra également être utilisée dans d'autres applications de transmission de données numériques par modulation FSK.

## Revendications

1. Procédé de modulation par déplacement de fréquence FSK pour générer un signal de sortie (S_{S}) formé d'une alternance de signaux à une première fréquence et de signaux à une seconde fréquence en fonction des deux valeurs d'un signal d'entrée (S_{E}), consistant à convertir un signal de référence (S₀) de fréquence constante et de forme rectangulaire en une série de n signaux secondaires (S₁, S₂, S₃, S₄) successifs de même fréquence que ce signal de référence (S₀), deux signaux secondaires successifs étant déphasés d'une valeur de 360/n degrés l'un par rapport à l'autre, à former par division du signal de référence (S₀) un signal de commutation (CC) ayant une troisième fréquence, à construire le signal de sortie (S_{S}) à la première fréquence en commutant cycliquement à la troisième fréquence les signaux secondaires dans un sens de la série de signaux secondaires et à construire le signal de sortie à la seconde fréquence en commutant cycliquement à la troisième fréquence les signaux secondaires dans le sens contraire de la série de signaux secondaires, où le sens de commutation dépend de la valeur du signal d'entrée (S_{E}).

2. Procédé selon la revendication 1, consistant à convertir le signal de référence (S₀) en une série de quatre signaux secondaires (S₁, S₂, S₃, S₄) successifs, deux signaux successifs étant déphasés de 90 degrés.

3. Procédé selon la revendication 1 ou 2, incluant un traitement pour démoduler un signal FSK consistant à injecter ce signal FSK parallèlement dans deux mélangeurs (M_{A}, M_{B}) pilotés respectivement par deux signaux secondaires (S₁, S₂) en quadrature pour former deux signaux mélangés (S_{A}, S_{B}), et à appliquer ces deux signaux mélangés à une bascule pour former un signal démodulé (S_{D}).

4. Procédé selon la revendication 3, incluant un traitement d'écho consistant à démoduler le signal de sortie (S_{S}) pour détecter un défaut de modulation FSK par analyse du signal démodulé (S_{D}).

5. Application du procédé selon l'une des revendications 1 à 4, à la communication par courants porteurs dans un véhicule automobile.

6. Modulateur par déplacement de fréquence FSK pour former un signal de sortie (S_{S}) alternant entre une première et une seconde fréquence en fonction des deux valeurs d'un signal d'entrée (S_{E}), comprenant un générateur d'un signal de référence (S₀) de fréquence constante et de forme rectangulaire, une unité de déphasage reliée à ce générateur de signal de référence, cette unité de déphasage convertissant le signal de référence (S₀) en n signaux secondaires (S₁, S₂, S₃, S₄) successifs de même fréquence que le signal de référence (S₀) de telle manière que deux signaux secondaires (S₁, S₂, S₃, S₄) successifs dans la série soient déphasés d'une valeur de 360/n, et une unité de commutation recevant en entrée les signaux secondaires et un signal de commutation ayant une troisième fréquence et produisant en sortie le signal de sortie, la dite unité de commutation étant agencée de telle manière à construire le signal de sortie (S_{S}) à la première fréquence en commutant cycliquement à la troisième fréquence les signaux secondaires dans un sens de la série de signaux secondaires et à construire le signal de sortie à la seconde fréquence en commutant cycliquement à la troisième fréquence les signaux secondaires dans le sens contraire de la série de signaux secondaires, où le sens de commutation dépend de la valeur du signal d'entrée (S_{E}).

7. Modulateur selon la revendication 6 dans lequel l'unité de déphasage et l'unité de commutation sont implémentées dans un microcontrôleur.

## Claims

1. FSK modulation method by frequency shift keying to generate an output signal (Ss) formed of an alternation of signals at a first frequency and signals at a second frequency according to two values of an input signal (SE), consisting in converting a reference signal (So) at a constant frequency and of rectangular form to a series of n successive secondary signals (S1, S2, S3, S4) whose frequency is the frequency of said reference signal (So), two successive secondary signals being phase shifted one with respect to the other of 360/n degrees, in forming by division of the reference signal (So) a switching signal (CC) having a third frequency, in constructing the output signal (Ss) at the first frequency by cyclically switching at the third frequency the secondary signals in an order of the secondary signals series and in constructing the output signal at a second frequency by cyclically switching at the third frequency the secondary signals in the reverse order of the secondary signals series, in which the switching order depends on the input signal value (SE).

2. Method according to claim 1, consisting in converting the reference signal (So) in a series of four successive secondary signals (S1, S2, S3, S4), two successive signal being phase shifted of 90 degrees.

3. Method according to claim 1 or 2, comprising a processing for demodulating an FSK signal consisting in injecting this FSK signal in parallel in two mixers (MA, MB) respectively driven by two secondary signals (S1, S2) in quadrature to form two mixed signals (SA, SB), and in applying these two mixed signals to a latch to form a demodulated signal (SD).

4. Method according to claim 3, comprising an echo processing consisting in modulating the output signal (Ss) to detect a FSK default modulation by analysing demodulated signal (SD).

5. Application of the method according to one of claims 1 to 4 to communication by carrier currents in a motor vehicle.

6. FSK modulator by frequency shift keying to form an output signal (Ss) alternating between a first and a second frequency according to two input signal (SE) values, comprising a generator of constant frequency and rectangular form reference signal (So), a phase shifting unit connected to the reference signal generator, this phase shifting unit converting the reference signal (So) in n successive secondary signals (S1, S2, S3, S4) whose frequency is the frequency of said reference signal (So) such that two successive secondary signals (S1, S2, S3, S4) in the series are phase shifted of 360/n, and a switching unit receiving as an input the secondary signals and a switching signal having a third frequency and producing as an output the output signal, said switching unit being arranged in order to construct the output signal (Ss) at the first frequency by cyclically switching at the third frequency the secondary signals and to construct the output signal at the second frequency by cyclically switching at the third frequency the secondary signals in the reverse order of the secondary signals series, in which the switching order depends on the input signal value (SE).

7. Modulator according to claim 6, in which the phase shifting unit and the switching unit are embedded in a microcontroller.

## Patentansprüche

1. Verfahren zur FSK-Modulation mit Frequenzverschiebung zur Erzeugung eines Ausgangssignals (Sₛ), das durch eine Wechselfolge von Signalen mit einer ersten Frequenz und von Signalen mit einer zweiten Frequenz in Abhängigkeit von den beiden Werten eines Eingangssignals (S_{E}) gebildet wird, darin bestehend, dass ein rechteckiges Referenzsignal (S₀) mit konstanter Frequenz in eine Reihe von n aufeinander folgende sekundäre Signale (S₁, S₂, S₃, S₄) mit derselben Frequenz wie das Referenzsignal (S₀) gewandelt wird, wobei die Phasen von zwei aufeinander folgenden sekundären Signalen um den Wert von 360/n Grad voneinander verschoben sind, um durch Division des Referenzsignals (S₀) ein Umschaltsignal (CC) mit einer dritten Frequenz zu bilden, um das Ausgangssignal (Sₛ) mit der ersten Frequenz durch in der dritten Frequenz zyklisches Umschalten der sekundären Signale in Richtung der Reihe der sekundären Signale zu erzeugen und um das Ausgangssignal der zweiten Frequenz durch in der dritten Frequenz zyklisches Umschalten der sekundären Signale entgegengesetzt zur Richtung der Sekundärsignale zu erzeugen, wobei die Umschaltrichtung vom Wert des Eingangssignals (S_{E}) abhängig ist.

2. Verfahren nach Anspruch 1, darin bestehend, dass das Referenzsignal (S₀) in eine Reihe von vier aufeinander folgenden sekundären Signalen (S₁, S₂, S₃, S₄) gewandelt wird, wobei zwei aufeinander folgende Signale um 90 Grad phasenverschoben sind.

3. Verfahren nach Anspruch 1 oder 2, das eine Verarbeitung zur Demodulation eines FSK-Signals einschließt, darin bestehend, dass dieses FSK-Signal parallel zwei Mischern (M_{A} und M_{B}) zugeführt wird, die durch jeweils zwei, um 90° phasenverschobene, sekundäre Signale (S₁, S₂) gesteuert werden, um zwei Mischsignale (S_{A}, S_{B}) zu bilden und um diese beiden Mischsignale einer Kippschaltung zur Bildung eines demodulierten Signals (S₀) zuzuführen.

4. Verfahren nach Anspruch 3, das eine Echoverarbeitung einschließt, darin bestehend, dass das Ausgangssignal (Sₛ) demoduliert wird, um durch Analyse des demodulierten Signals (S_{D}) einen FSK-Modulationsfehler zu entdecken.

5. Anwendung des Verfahrens nach einem der Ansprüche 1 bis 4 auf die Kommunikation über Trägerströme in einem Kraftfahrzeug.

6. FSK-Modulator mit Frequenzverschiebung zur Bildung eines Ausgangssignals (Sₛ), das in Abhängigkeit von den beiden Werten eines Eingangssignals (S_{E}) zwischen einer ersten und einer zweiten Frequenz wechselt, bestehend aus einem Erzeuger eines rechteckigen Referenzsignals (S₀) mit konstanter Frequenz, einer an diesen Erzeuger des Referenzsignals angeschlossene Einheit zur Phasenverschiebung, wobei diese Einheit zur Phasenverschiebung das Referenzsignal (S₀) in n aufeinander folgende sekundäre Signale (S₁, S₂, S₃, S₄) mit derselben Frequenz wie das Referenzsignal (S₀) derart wandelt, dass zwei aufeinander folgende sekundäre Signale (S₁, S₂, S₃, S₄) der Reihe eine Phasenverschiebung mit einem Wert von 360/n aufweisen, und einer Umschalteinheit, an deren Eingang die sekundären Signale und ein Umschaltsignal mit einer dritten Frequenz eingehen und die am Ausgang das Ausgangssignal erzeugt, wobei besagte Umschalteinheit derart konstruiert ist, dass das Ausgangssignal (Sₛ) mit der ersten Frequenz durch in der dritten Frequenz zyklisches Umschalten der sekundären Signale in Richtung der Reihe der sekundären Signale erzeugt wird und das Ausgangssignal der zweiten Frequenz durch in der dritten Frequenz zyklisches Umschalten der sekundären Signale entgegengesetzt zur Richtung der Reihe der sekundären Signale erzeugt wird, wobei die Umschaltrichtung vom Wert des Eingangssignals (S_{E}) abhängig ist.

7. Modulator nach Anspruch 6, bei dem die Einheit zur Phasenverschiebung und die Umschalteinheit in einen Mikrocontroller implementiert sind.
